# EUROPÄISCHE PATENTANMELDUNG

(11) **EP 3 839 001 A1**
(43) Veröffentlichungstag der Anmeldung: **23.06.2021**
(21) Anmeldenummer: 19219100.5
(22) Anmeldetag: 20.12.2019
(51) Int. Cl.: C09J 11/00, C09J 125/04, C09J 133/04, C09J 131/04, B32B 7/12, C09D 7/43, C09J 1/00, C04B 28/00

(54) **WÄSSRIGE KLEBERZUSAMMENSETZUNG, BESCHICHTUNG ERHALTEN MIT DER WÄSSRIGEN KLEBERZUSAMMENSETZUNG SOWIE VERWENDUNG DER WÄSSRIGEN KLEBERZUSAMMENSETZUNG**

(71) Anmelder: DAW SE, 64372 Ober-Ramstadt (DE)
(72) Erfinder: Brenner, Thomas, 64367 Mühltal (DE); Westmeier, Johannes, 64572 Büttelborn (DE); Eigenbrodt, Dirk, 64397 Modautal (DE)
(74) Vertreter: Metten, Karl-Heinz

(57) **Zusammenfassung**

Die vorliegende Erfindung betrifft eine wässrige Kleberzusammensetzung mit einem pH-Wert größer oder gleich 10,0, enthaltend a) ein pH-Einstellmittelsystem, c) einen Polysaccharid-Verdicker mit einer Höppler-Viskosität in 1,9 %-iger wässriger Lösung im Bereich von 200 bis 200.000 mPas, gemessen bei 20°C nach DIN 53015:2018-07, und d) ein Additiv sowie b) gegebenenfalls ein polymeres organisches Bindemittel und e) gegebenenfalls Füllstoffe und/oder Pigmente. Ferner betrifft die Erfindung eine Beschichtung erhalten aus der wässrigen Kleberzusammensetzung. Außerdem betrifft die Erfindung ein beschichtetes Substrat, umfassend in dieser Reihenfolge ein Substrat mit einer beschichtbaren Oberfläche, darauf vorliegend die erfindungsgemäße Beschichtung und haftend mit dieser Beschichtung verbunden einen Wand-, Decken- oder Bodenbelag. Schließlich betrifft die Erfindung die Verwendung der wässrigen Kleberzusammensetzung für die haftende Anbindung einer Tapete, einer gewebten Oberflächenbedeckung oder eines Vlieses auf einer Substratoberfläche.

## Beschreibung

Die vorliegende Erfindung betrifft eine wässrige Kleberzusammensetzung. Ferner betrifft die Erfindung eine Beschichtung erhalten mit der wässrigen Kleberzusammensetzung sowie die Verwendung dieser wässrigen Kleberzusammensetzung.

Gattungsgemäße wässrige Kleberzusammensetzungen sind dem Fachmann bekannt. Solche wässrigen Kleberzusammensetzungen umfassen zum Beispiel Kleister, wie sie regelmäßig für die Anbringung von Tapeten eingesetzt werden. Hierbei handelt es sich um wässrige Systeme enthaltend Stärke oder Celluloseether wie Methylcellulose. Aufgrund der signifikanten Menge an organischen Bestandteilen kann es bei längerer Lagerung zur Schimmelbildung kommen, wenn keine Konservierungsmittel zugesetzt werden.

Mit der EP 2 942 336 B1 wird eine wässrige Kleberzusammensetzung unter Schutz gestellt, enthaltend mindestens 50 Gew.-% Wasser, 0,1 bis 4,0 Gew.-% Wasserglas, 0,1 bis 7,0 Gew.-% an Stärke und/oder Stärke-Derivaten, o bis 15 Gew.-% Füllstoffe sowie Polymerbindemittel ausgewählt aus Acrylat-, Styrol-, Vinylacetat-, Vinvlpropionat- und/oder Urethanhomo- oder -copolymeren oder eine beliebige Mischung hiervon, wobei sich die Mengenangaben von Wasserglas, Stärke und/oder Stärke-Derivaten und Füllstoffen auf den in der wässrigen Zusammensetzung enthaltenen Feststoff der jeweiligen Substanz beziehen. Diese wässrigen Kleberzusammensetzungen sollen über eine gute Haftung insbesondere auf Gips oder gipshaltigen Oberflächen verfügen und sich einfach auftragen lassen.

Aus der EP 2 589 579 A1 geht eine wässrige Zusammensetzung hervor, umfassend mindestens ein in Wasser gelöstes Wasserglas und/oder Kieselsol und mindestens ein in Wasser dispergiertes organisches Bindemittel, wobei der pH-Wert dieser Zusammensetzung größer oder gleich 9,5 sein soll. Derartige wässrige Zusammensetzungen sollen zu einer verbesserten Haftung auf solchen gipsverspachtelten, gipsabgezogenen oder gipsverputzten Arealen beitragen, bei denen sich der Gips schlecht bzw. nur unvollständig umgesetzt hat.

Die DE 100 01 831 A1 betrifft silikatische Beschichtungsmassen, umfassend organische Ammoniumverbindungen und Füllstoffe sowie Wasserglas oder eine Mischung aus Wasserglas und Kieselsol, wobei das molare Verhältnis von SiO₂ zu Alkalioxid 5 bis 30 Mol SiO₂ pro Mol Alkalioxid beträgt. Derartige silikatische Beschichtungsmassen sollen auch im einkomponentigen Zustand stabil sein.

In der DE 10 2014 013 455 A1 wird abgestellt auf Dispersionsfarben, enthaltend 2 bis 30% Polymerdispersion gerechnet als Feststoffanteil, 10 bis 60% Pigment und/oder Füllstoff, 0,5 bis 5% Silikonat als Additiv und zu 100% ergänzte Anteile an Wasser. Derartige Dispersionsfarben sollen verbesserte Verarbeitungseigenschaften aufweisen.

Aus der EP 1 297 079 A1 geht eine konservierungsmittelfreie Dispersionsfarbe hervor, enthaltend 4 bis 15 Gew.-% Polymerdispersion gerechnet als Feststoffanteil, 10 bis 55 Gew.-% Pigment und/oder Füllstoff sowie maximal 2 Gew.-% Wasserglas als Additiv und zu 100 Gew.-% ergänzte Anteile an Wasser. Die Dispersionsfarbe gemäß EP 1 297 079 A1 soll sich gut und sicher verarbeiten lassen und darüber hinaus eine befriedigende Lagerstabilität aufweisen.

Die aus dem Stand der Technik bekannten wässrigen Systeme lassen noch stets Wünsche offen, zumal deren Klebereigenschaften häufig, wenn überhaupt, allenfalls nur von nachrangiger Bedeutung sind. Demgemäß lag der vorliegenden Erfindung die Aufgabe zugrunde, wässrige Kleberzusammensetzungen zur Verfügung zu stellen, die auch ohne Zusätze an herkömmlichen Konservierungsmitteln über eine ausreichende Lagerstabilität über die gesamte Herstell- und Lieferkette verfügen, die überdies eine zeitlich verzögerte bzw. zeitlich ausgedehnte Verarbeitung gestatten und die über eine hinreichende Kleberqualität, insbesondere ein ausgeprägtes Haftvermögen, zur Anbringung von Tapeten, gewebten Bahnen und Vliesbahnen verfügen.

Demgemäß wurde eine wässrige Kleberzusammensetzung gefunden, die sich dadurch auszeichnet, dass sie einen pH-Wert größer oder gleich 10,0, bevorzugt im Bereich von größer 10 bis 12,0 und besonders bevorzugt im Bereich von 11,0 bis 11,5, aufweist oder eingestellt ist auf einen pH-Wert größer oder gleich 10,0, bevorzugt im Bereich von größer 10 bis 12,0 und besonders bevorzugt im Bereich von 11,0 bis 11,5, enthaltend oder bestehend aus
a) mindestens einem pH-Einstellmittelsystem ausgewählt aus der Gruppe bestehend aus
   a1-1) Alkylalkoxysilan, Alkylalkoxysiloxan und/oder Alkalialkylsilikonat, bevorzugt Alkylalkoxysilan und besonders bevorzugt Kaliummethylsilikonat,
   a1-2) Wasserglas und/oder Kieselsol, insbesondere Wasserglas, und
   a1-2) gegebenenfalls Alkalihydroxid, Erdalkalihydroxid und/oder Alkalioxid,
   oder
   a2-1) Alkylalkoxysilan, Alkylalkoxysiloxan und/oder Alkalialkylsilikonat, bevorzugt Alkylalkoxysilan und besonders bevorzugt Kaliummethylsilikonat,
   a2-2) gegebenenfalls Alkalihydroxid, Erdalkalihydroxid und/oder Alkalioxid,
      wobei die Kleberzusammensetzung im Wesentlichen frei ist von Wasserglas und/oder Kieselsol, insbesondere frei von Kieselsol und Wasserglas,
   oder
   a3-1) Alkalihydroxid, Erdalkalihydroxid und/oder Alkalioxid, insbesondere Alkalihydroxid, und
   a3-2) gegebenenfalls Wasserglas und/oder Kieselsol, insbesondere Wasserglas,
      wobei die Kleberzusammensetzung im Wesentlichen frei ist von Kaliummethylsilikonat, insbesondere Alkalialkylsilikonat,
   oder
   a4-1) Wasserglas und/oder Kieselsol, insbesondere Wasserglas, und
   a4-2) gegebenenfalls Alkalihydroxid, Erdalkalihydroxid und/oder Alkalioxid, insbesondere Alkalihydroxid, und
      wobei die Kleberzusammensetzung im Wesentlichen frei ist von Kaliummethylsilikonat, insbesondere Alkalialkylsilikonat,
   und
b) gegebenenfalls mindestens einem polymeren organischen Bindemittel,
c) mindestens einem Polysaccharid-Verdicker, insbesondere kaltwasserlöslichem Polysaccharid-Verdicker, ausgewählt aus der Gruppe bestehend aus Celluloseethern, insbesondere Methylcellulose, Carboxyalkylcellulose, insbesondere Carboxymethylcellulose, Hydroxyalkylcellulose, Alkylhydroxyalkylcellulose, Stärke, insbesondere Kartoffelstärke, Stärkeethern, insbesondere modifizierte Amylose und/oder Amylopectin, Guarethern, Dextrinen und Mischungen dieser Verbindungen, mit einer Höppler-Viskosität in 1,9 %-iger wässriger Lösung im Bereich von 200 bis 200.000 mPas, bevorzugt im Bereich von 1.000 bis 50.000 mPas, besonders bevorzugt im Bereich von 2.000 bis 40.000 mPas sowie insbesondere im Bereich von 3.000 bis 30.000 mPas oder 3.000 bis 28.000 mPas, jeweils gemessen bei 20°C nach DIN 53015:2018-07, und
d) mindestens einem Additiv sowie
e) gegebenenfalls Füllstoffen und/oder Pigmenten.

In einer bevorzugten Ausführungsform sind die erfindungsgemäßen wässrigen Kleberzusammensetzungen im Wesentlichen frei von Kieselsol.

Besonders bevorzugte Ausführungsformen der erfindungsgemäßen wässrigen Kleberzusammensetzungen zeichnen sich dadurch aus, dass sie im Wesentlichen konservierungsmittelfrei sind. Mit der vorliegenden Erfindung wird demgemäß bevorzugt abgestellt auf wässrige Kleberzusammensetzungen, die im Wesentlichen frei von Topf- und/oder Filmkonservierungsmitteln sind, bevorzugt frei von Topfkonservierungsmitteln, z.B. frei von Isothiazolinonen, und besonders bevorzugt frei von Topf- und Filmkonservierungsmitteln. Demgemäß sind mit der vorliegenden Erfindung wässrige Kleberzusammensetzungen zugänglich, die frei von organischen bioziden Konservierungsmitteln und besonders bevorzugt frei von jeglichen Konservierungsmitteln sind. Die erfindungsgemäßen wässrigen Kleberzusammensetzungen werden im Sinne der vorliegenden Erfindung im Einklang mit der "Vergabegrundlage für Umweltzeichen" der RAL gGmbH betreffend "Emissionsarme Innenwandfarben RAL-UZ 102" (Ausgabe Januar 2015) regelmäßig als konservierungsmittelfrei angesehen, wenn darin keine Konservierungsmittel oder Konservierungsmittel, auf die Einzelsubstanz bezogen (einschließlich Formaldehyd), in einer Menge kleiner 2 ppm, sowie in Bezug auf CIT (5-Chlor-2-methyl-4-isothiazolin) in einer Menge kleiner 0,5 ppm enthalten sind.

Unter den erfindungsgemäßen wässrigen Kleberzusammensetzungen sind solche besonders bevorzugt, um die der Erfindung zugrunde liegende Aufgabe zuverlässig und reproduzierbar zu lösen, die mindestens ein Alkalialkylsilikonat, insbesondere Kaliummethylsilikonat, mindestens ein Alkalihydroxid, insbesondere Kaliumhydroxid, und als den mindestens einen Polysaccharid-Verdicker mindestens einen Celluloseether enthalten. Mit dem vorangehend genannten System gelingt es regelmäßig, den pH-Wert in einer Weise einzustellen, dass dieser größer oder gleich 10,0 ist und bevorzugt im Bereich von größer 10 bis 12,0 und besonders bevorzugt im Bereich von 11,0 bis 11,5 liegt. Alternativ kann auch vorgesehen sein, dass der pH-Wert ausschließlich durch Zugabe eines Alkalihydroxids und/oder Alkalioxids eingestellt wird. Bei dieser Ausführungsform können optional Wasserglas und/oder Kieselsol, insbesondere Wasserglas, mit verwendet werden. Besonders bevorzugt kommt die vorangehend genannte Ausführungsform ohne Kaliummethylsilikonat und insbesondere ohne jegliche Alkalialkylsilikonate aus.

Die Messung des pH-Wertes der erfindungsgemäßen wässrigen Kleberzusammensetzung kann auf der Basis der DIN 55659-1:2012-01 (Beschichtungsstoffe - Bestimmung des pH-Wertes) vorgenommen werden. Hierfür können die erfindungsgemäßen wässrigen Kleberzusammensetzungen mit einer pH-Elektrode bei einer Temperatur von 23 ± 2 °C vermessen werden. Ein geeignetes pH-Meter kann u.a. von der Firma Mettler Toledo, Deutschland, bezogen werden, z.B. das Gerät SevenEasy, wobei als pH-Messelektrode das Produkt InLab ExpertPro der Firma Mettler Toledo verwendet werden kann (Best.-Nr. 51343101).

Das polymere organische Bindemittel wird vorzugsweise auf Basis einer wässrigen Dispersion eingesetzt. Besonders geeignete polymere organische Bindemittel im Sinne der vorliegenden Erfindung gehen zurück auf Vinylacetat/Olefin-Copolymere, insbesondere Vinylacetat/Ethylen-Copolymere, Copolymere auf Basis von Vinylaromaten, insbesondere Styrol, und (Meth)acrylaten, insbesondere Acrylaten, Copolymere auf Basis von Reinacrylaten sowie auf Organo-Silikat-Hybridbindemittel, insbesondere Organo-Silikat/Acrylat-Hybridbindemittel. Bei den besonders geeigneten Organo-Silikat-Hybridbindemitteln, insbesondere den Organo-Silikat/Acrylat-Hybridbindemitteln, liegen Silicapartikel, insbesondere nanoskalierte Silikapartikel, eingebunden in einer (Meth)acrylatmatrix, insbesondere einer Reinacrylatmatrix, vor. Ferner können geeignete Organo-Silikat-Hybridbindemittel auf Basis von amorphem Siliciumdioxid, insbesondere auf der Basis von amorphem Siliciumdioxid, das in einer Matrix aus einem Homo- oder Copolymeren aus Acrylaten und/oder Me-thacrylaten vorliegt, zum Einsatz kommen.

Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung, insbesondere Styrol, darstellt. Ganz besonders bevorzugt wird für die erfindungsgemäßen wässrigen Kleberzusammensetzungen, in denen ein organisches Bindemittel zugegen ist, auf Vinylacetat/Olefin-Copolymere, insbesondere Vinylacetat/Ethylen-Copolymere, zurückgegriffen.

Geeignete Additive können ausgewählt sein aus der Gruppe bestehend aus Stabilisatoren, Netzmitteln, Dispergiermitteln, Neutralisationsmitteln, Entschäumern und beliebigen Mischungen dieser Komponenten.

Die erfindungsgemäßen Kleberzusammensetzungen können ferner Füllstoffe enthalten. Geeignete Füllstoffe können zum Beispiel ausgewählt werden aus der Gruppe bestehend aus Quarziten, Dolomiten, Hektoriten, Calciten, Silikaten, z.B. Schichtsilikaten, Vulkaniten, Kieselerden, Diatomeenerden und deren beliebige Mischungen. Besonders bevorzugt wird unter den geeigneten Füllstoffen auf Calciumcarbonate, Silikate, insbesondere Kaolin, Glimmer und/oder Talke, oder deren Mischungen zurückgegriffen.

Geeignete Pigmente sind dabei ausgewählt aus der Gruppe bestehend aus Titandioxid, Zinksulfid, Zinkoxid, Baryt, Ruß, Eisenoxid, Chromoxid, Kobaltblau, Phtalocyaninpigmenten, Spinellpigmenten und Nickel- und Chromtitanat und deren Mischungen. In den erfindungsgemäßen Kleberzusammensetzungen können optional auch Pigmente einzeln oder in beliebiger Kombination zum Einsatz kommen. Exemplarisch seien anorganische Pigmente wie anorganische Bunt-, Schwarz- und Weißpigmente sowie Glanzpigmente und organische Pigmente wie organische Bunt- und Schwarzpigmente genannt. Als geeignete anorganische Weißpigmente kommen zum Beispiel Zinkweiß, Farbenzinkoxid; Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat. Unter den genannten Pigmenten umfassen besonders geeignete Pigmente zum Beispiel Titandioxid, Zinksulfid, Zinkoxid, Baryt, Ruß, Eisenoxid, Chromoxid, Kobaltblau, Phtalocyaninpigmenten Spinellpigment, Nickeltitanat, Chromtitanat und deren beliebige Mischungen.

In einer zweckmäßigen Ausführungsvariante der erfindungsgemäßen wässrigen Kleberzusammensetzungen, die in einer Ausführungsform nicht zwingend über ein organisches Bindemittel zu verfügen hat, können diese dadurch gekennzeichnet sein, dass der Trockengewichtsanteil an Komponente a), insbesondere an Alkalialkylsilikonat, insbesondere Kaliummethylsilikonat, bezogen auf das Gesamtgewicht der Kleberzusammensetzung, im Bereich von 0,05 bis 2,5 Gew.%, bevorzugt im Bereich von 0,1 bis 2,0 Gewichtsprozent und besonders bevorzugt im Bereich von 0,2 bis 1,5 Gewichtsprozent, liegt und/oder dass
der Trockengewichtsanteil an organischem Bindemittel b), bezogen auf das Gesamtgewicht der Kleberzusammensetzung, im Bereich von 0 bis 20 Gewichtsprozent, bevorzugt im Bereich von 2 bis 15 Gewichtsprozent und besonders bevorzugt im Bereich von 3 bis 10 Gewichtsprozent, liegt und/oder dass
der Trockengewichtsanteil des mindestens einen Polysaccharid-Verdickers c), bezogen auf das Gesamtgewicht der Kleberzusammensetzung, im Bereich von 0,1 bis 10 Gew%, bevorzugt im Bereich von 0,5 bis 7,5 Gewichtsprozent und besonders bevorzugt im Bereich von 1,0 bis 5,0 Gewichtsprozent, liegt und/oder dass
der Trockengewichtsanteil an Additiven d), bezogen auf das Gesamtgewicht der Kleberzusammensetzung, im Bereich von 0,01 bis 5 Gewichtsprozent, bevorzugt im Bereich von 0,05 bis 3,0 Gewichtsprozent und besonders bevorzugt im Bereich von 0,07 bis 2,0 Gewichtsprozent, liegt und/oder dass
der Gewichtsanteil an dem Füllstoff und/oder Pigment e), bezogen auf das Gesamtgewicht der Kleberzusammensetzung, im Bereich von o bis 20 Gewichtsprozent, bevorzugt im Bereich von 1 bis 15 Gewichtsprozent und besonders bevorzugt im Bereich von 2 bis 10 Gewichtsprozent, liegt und/oder dass
der Anteil an Wasser, bezogen auf das Gesamtgewicht der Kleberzusammensetzung, oberhalb von 50 Gewichtsprozent, bevorzugt im Bereich von 60 bis 95 Gewichtsprozent und besonders bevorzugt im Bereich von 70 bis 90 Gewichtsprozent, liegt, wobei die die Kleberzusammensetzung bildenden Komponenten sich stets zu 100,0 Gew,-% addieren.

Derartige wässrige erfindungsgemäße Kleberzusammensetzungen sind besonders bevorzugt, bei denen
der Trockengewichtsanteil an Alkalialkylsilikonat, insbesondere Kaliummethylsilikonat, bezogen auf das Gesamtgewicht der Kleberzusammensetzung, im Bereich von 0,1 bis 2,0 Gewichtsprozent und bevorzugt im Bereich von 0,2 bis 1,0 Gewichtsprozent, liegt und dass
der Trockengewichtsanteil an Alkalihydroxid, insbesondere Kaliumhydroxid, bezogen auf das Gesamtgewicht der Kleberzusammensetzung, im Bereich von 0,1 bis 2,0 Gewichtsprozent und bevorzugt im Bereich von 0,2 bis 1,0 Gewichtsprozent, liegt und dass
der Trockengewichtsanteil an organischem Bindemittel b), bezogen auf das Gesamtgewicht der Kleberzusammensetzung, im Bereich von o bis 15 Gewichtsprozent und bevorzugt im Bereich von 3 bis 10 Gewichtsprozent, liegt und dass
der Trockengewichtsanteil des mindestens einen Polysaccharid-Verdickers c), insbesondere des Celluloseethers c), bezogen auf das Gesamtgewicht der Kleberzusammensetzung, im Bereich von 0,5 bis 7,5 Gewichtsprozent und bevorzugt im Bereich von 1,0 bis 5,0 Gewichtsprozent, liegt und dass
der Trockengewichtsanteil an Additiven d), bezogen auf das Gesamtgewicht der Kleberzusammensetzung, im Bereich von 0,05 bis 3,0 Gewichtsprozent und bevorzugt im Bereich von 0,07 bis 2,0 Gewichtsprozent, liegt und dass
der Gewichtsanteil an dem Füllstoff und/oder Pigment e), bezogen auf das Gesamtgewicht der Kleberzusammensetzung, im Bereich von 0 bis 20 Gewichtsprozent und bevorzugt im Bereich von 2 bis 10 Gewichtsprozent, liegt und dass
der Anteil an Wasser, bezogen auf das Gesamtgewicht der Kleberzusammensetzung, im Bereich von 60 bis 95 Gewichtsprozent und bevorzugt im Bereich von 70 bis 90 Gewichtsprozent, liegt, wobei die die Kleberzusammensetzung bildenden Komponenten sich stets zu 100,0 Gew.-% addieren.

Die erfindungsgemäßen wässrigen Beschichtungsstoffe zeichnen sich in einer bevorzugten Ausführungsform dadurch aus, dass sie eine Fließkurve, gebildet aus den auf der Abszisse aufgetragenen Schergeschwindigkeiten und den auf der Ordinate aufgetragenen Viskositäten in mPas, aufweisen, die über eine bei einer Schergeschwindigkeit von 400 s⁻¹ ermittelte Viskosität im Bereich von 95 bis 2000 mPas, bevorzugt im Bereich von 100 bis 1750 mPas und besonders bevorzugt im Bereich von 400 bis 1500 mPas oder alternativ oder zusätzlich, vorzugsweise zusätzlich, über eine bei einer Schergeschwindigkeit von 1200 s⁻¹ ermittelte Viskosität im Bereich von 50 bis 750 mPas, bevorzugt im Bereich von 60 bis 650 mPas und besonders bevorzugt im Bereich von 250 bis 600 mPas verfügt. Das Fließ- bzw. rheologische Verhalten der erfindungsgemäßen Beschichtungsstoffe lässt sich z.B. anhand der Fließkurven bestimmen. Hierfür kann z.B. auf das Rotationsrheometer HAAKE RheoStress 1 der Firma Thermo Scientific unter Verwendung der Sofware HAAKE Rhe-oWin 4.83.0004 zurückgegriffen werden. Die Messung kann dabei wird zum Beispiel analog der DIN 53019-1:1980-05 "Messung von Fließkurven und Viskositäten mit Rotationsviskosimetern mit Standardgeometrie" vorgenommen werden. Für die Temperierung kann das Gerät Haake Thermostat V verwendet werden. In Form und Material bzw. die Messgeometrie der Messapparatur bzw. des Rotors basieren zweckmäßigerweise auf der Spezifikation Z20 DIN. Für die Prüfbedingungen können die Standardeinstellungen gemäß dem Messsystem Z20 DIN verwandt werden. Um vergleichbare Ergebnisse zu erhalten, sollten die Messungen bei konstanter Temperatur, beispielsweise bei 23 °C vorgenommen werden. Im Allgemeinen reicht es aus, eine Rotationsrampe von 0 bis 1.500 s-1 im Zeitraum von 180 s zu fahren. Der zeitliche Verlauf der Messungen lässt sich untergliedern in drei Segmente, wobei im ersten Segment die Messprobe über eine Dauer von 300 s temperiert wird, anschließend über einen Zeitraum von 180 s ein Schergefälle von o bis 1500 1/s (Segment 2) und sodann über einen Zeitraum von 180 s ein Schergefälle von 1500 bis 0 1/s (Segment 3) gefahren wird. Die Werte für die Viskosität werden aus dem Segment 3 für die Schergeschwindigkeiten 400 1/s und 1200 1/s bestimmt.

Die der Erfindung zugrunde liegende Aufgabe wird des Weiteren gelöst durch eine Beschichtung, erhalten oder erhältlich aus der erfindungsgemäßen wässrigen Kleberzusammensetzung.

Bei dieser Beschichtung handelt es sich vorzugsweise um eine Zwischenbeschichtung oder vorteilhafter Weise um eine dispersionsgebundene Zwischenbeschichtung, insbesondere zwischen einer Oberfläche eines Substrats, insbesondere Putzschichtoberfläche, und einem Wand- oder Bodenbelag, insbesondere einer Tapete, einer gewebten Oberflächenbedeckung oder einem Vlies.

Die der Erfindung zugrunde liegende Aufgabe wird hierbei in besonders zuverlässiger Weise durch solche erfindungsgemäßen Beschichtungen gelöst, die im Wesentlichen frei von Wasserglas sind. In einer alternativen Ausführungsform kann vorgesehen sein, dass die erfindungsgemäßen Beschichtungen im Wesentlichen frei von Kaliummethylsiliconat, insbesondere Alkalialkylsiliconat, sind.

Gemäß einem weiteren Aspekt wird die der Erfindung zugrunde liegende Aufgabe gelöst durch ein beschichtetes Substrat, umfassend in dieser Reihenfolge ein Substrat mit einer beschichtbaren Oberfläche, darauf vorliegend eine erfindungsgemäße Beschichtung und haftend mit dieser Beschichtung verbunden einen Wand- oder Bodenbelag, insbesondere eine Tapete, eine gewebten Oberflächenbedeckung oder ein Vlies. In zweckmäßigen Ausgestaltungen weist bei diesen beschichteten Substraten der Wand- oder Bodenbelag, insbesondere das Vlies, besonders bevorzugt ein Zellstoff/Polyester-Vliesstreifen, beim Schälversuch in Anlehnung an DIN EN 1372:2015-06 einen Schälwiderstand im Bereich von 0,10 bis kleiner 0,40 N/mm, insbesondere im Bereich von 0,12 bis 0,35 N/mm, auf. Der Schälwiderstand wurde in einem Punkt abweichend von der DIN EN 1372:2015-06 ermittelt; daher heißt es "in Anlehnung an DIN EN 1372:2015-06" und nicht "gemäß der DIN EN 1372:2015-06". Während die DIN EN 1372:2015-06 fordert, die Beschichtungsmassen mit einem Zahnspachtel aufzubringen, sind für die Ermittlung der Schälwiderstände gemäß der vorliegenden Erfindung die Beschichtungsmassen mit einem Pinsel aufgetragen worden.

Die erfindungsgemäßen wässrigen Kleberzusammensetzungen können besonders zweckmäßig für die haftende Anbindung einer Tapete, einer gewebten Oberflächenbedeckung oder eines Vlieses an einer Substratoberfläche, insbesondere Putzschichtoberfläche, eingesetzt werden. Geeignete Vliese, die mit den erfindungsgemäßen wässrigen Beschichtungsstoffen verklebt werden können, weisen beispielsweise ein Flächengewicht im Bereich von etwa 45g/m² bis etwa 20g/m² auf. Ferner können mit den erfindungsgemäßen wässrigen Beschichtungsstoffen ohne weiteres Gewebebahnen verklebt werden mit einem Flächengewicht im Bereich von beispielsweise etwa 140g/m² bis etwa 250 g/m². Schließlich ist es mit den erfindungsgemäßen wässrigen Beschichtungsstoffen ebenfalls möglich, sogar sogenanntes schweres Glasgewebe mit einem Flächengewicht von beispielsweise im Bereich von etwa 240g/m² bis etwa 500 g/m² verlässlich anzubringen.

Nachfolgend wird das anhand von beispielhaften Schälversuchen gemäß DIN EN 1372:2015-06 ermittelte Haftverhalten der erfindungsgemäßen wässrigen Kleberzusammensetzungen beschrieben. Hierfür wurden Gipskartonplatten (190 mm x 50 mm), Zellstoff/Polyester-Vliesstreifen (250 mm x 50 mm) und drei erfindungsgemäße wässrige Kleberzusammensetzungen (A63, A64, A65) zur Verfügung gestellt. Es wurden zwei Prüfserien an jeweils sechs Probenkörpern durchgeführt. In der ersten Prüfserie wurden die Gipskartonplatten direkt mit den unterschiedlichen wässrigen Kleberzusammensetzungen und den Zellstoff/Polyester-Vliesstreifen beschichtet. In der zweiten Prüfserie wurden die Gipskartonplatten zunächst mit einer Gips-Spachtelmasse beschichtet (Schichtdicke ca. 3 mm). Anschließend brachte man auf die ausgehärtete Gipsschicht mithilfe der erfindungsgemäßen wässrigen Kleberzusammensetzungen die Zellstoff/Polyester-Vliesstreifen an. Abweichend von der DIN EN 1372 wurden die Beschichtungsmassen nicht mit einem Zahnspachtel, sondern, praxisorientierter, mit einem Pinsel aufgetragen. Die Auftragsmenge betrug ca. 150 g/m². Die erhaltenen Probenkörper wurden für 24 Stunden nach Abschluss der Herstellung bis zur Schälprüfung im Klimaraum bei 23 ± 2 °C und 50 ± 5 % relativer Luftfeuchte gemäß DIN EN ISO 23270:1991-09 gelagert. Der Schälwiderstand wurde gemäß DIN EN 1372:2015-06 mit einer Zwick/Roell Universalprüfmaschine (Typ BT1) mit 5 kN Kraftaufnehmer bestimmt, d.h. die Vorkraft in der Schälprüfung betrug 5 kN (Prüfgeschwindigkeit: 100 mm/min; Messstrecke: 160 mm; Umgebungsbedingungen: 21 °C / 33 % r.F.). Der Schälwiderstand (N/mm) berechnete sich aus der aufgezeichneten Schälkraft dividiert durch die Probenbreite von 50 mm. Für die Bestimmung des Mittelwertes der Schälkraft wurden jeweils die ersten und die letzten 20 mm der Messstrecke unberücksichtigt gelassen.

Die erfindungsgemäßen wässrigen Kleberzusammensetzungen A63, A64 und A65 verfügten über die nachfolgend spezifizierten Zusammensetzungen sowie die ebenfalls angegebenen Viskositäten (ermittelt, wie vorangehend beschrieben):

| **Zusammensetzungen** | **A63** | **A64** | **A65** |
|---|---|---|---|
| Polysaccharid-Verdicker | 3,0 | 3,8 | 1,5 |
| Natronlauge (20 %-ig) | 0,3 | 0,3 | 0,3 |
| Füllstoff | 5 | 5 | 5 |
| Vinylacetat/Ethylen/Vinylester-Copolymer (50 %-ig) | 13 | 13 | 13 |
| Wasserglas (28 %-ig) | 1 | 1 | 1 |
| Kaliummethylsilikonat (55 %-ig) | 1 | 1 | 1 |
| Entschäumer | 0,1 | 0,1 | 0,1 |
| Wasser | 76,6 | 75,8 | 78, 1 |
| Viskosität - 400/s (mPas) | 786 | 1309 | 111 |
| Viskosität - 1200/s (mPas) | 359 | 518 | 69 |

Die ermittelten Schälwiderstände sind in der nachfolgenden Tabelle zusammengefasst:

| **Schälwiderstand** | | |
|---|---|---|
| **Probe** | **auf Gipskarton** | **auf Gips-Spachtelmasse** |
| A63 | 0,278 N/mm | 0,155 N/mm |
| A64 | 0,231 N/mm | 0,285 N/mm |
| A65 | 0,039 N/mm | 0,023 N/mm |

Die beim Abreißen der mit den Formulierungen A63 und A64 befestigten Vlieswandbeläge ermittelten Schälwiderstände lagen im Bereich der Eigenfestigkeit der verwendeten Zellstoff/Polyester-Vliesstreifen.

Mit der vorliegenden Erfindung lassen sich überraschenderweise wässrige Kleberzusammensetzungen erhalten, die über eine für übliche Liefer-, Lagerungs- und Nutzungszeiträume hinreichende Stabilität verfügen, und zwar ohne dass organische biozide Verbindungen zuzusetzen sind. Auf den Einsatz von herkömmlichen Topfkonservierungsmitteln kann folglich vollständig verzichtet werden. Von Vorteil ist weiterhin, dass die erfindungsgemäßen wässrigen Kleberzusammensetzungen einen variablen Zugang zu konservierungsmittelfreien Systemen gestatten. Auch wurde überraschend gefunden, dass mit bevorzugten Ausführungsformen der erfindungsgemäßen wässrigen Kleberzusammensetzungen eine lange Wasserretention erreicht werden kann. Dies gestattet zum Beispiel die hydraulische Abbindung des auf einer Substratoberfläche verbliebenen Calciumsulfats. Auch wird mit den erfindungsgemäßen wässrigen Kleberzusammensetzungen eine zeitlich verzögerte bzw. zeitlich ausgedehnte Verarbeitung gestattet. Überdies kann mit diesen Zusammensetzungen eine hinreichende Kleberqualität, insbesondere ein ausgeprägtes Haftvermögen, zur Anbringung von z.B. Tapeten, gewebten Bahnen und Vliesbahnen sichergestellt werden. Dabei erfolgt die Ablösung in den überwiegenden Fällen nicht im Klebesystem selber, sondern entweder durch Bruch im aufgeklebten Vlies oder z.B. durch Abreißen des Papiers auf der Gipskartonplatte. Es ist auch möglich, dass der Bruch zunächst in der Klebeschicht beginnt, dort aber nicht fortgesetzt wird, sondern dass der eigentliche Bruch im aufgeklebten Oberflächenbeschichtung, z.B. dem Vlies, Gewebe, dem Papier der Gipskartonplatte oder dergleichen erfolgt. Darüber hinaus hat sich überraschend gezeigt, dass mit den erfindungsgemäßen Kleberzusammensetzungen die Einstellung einer für Verarbeitungszwecke optimalen Viskosität zuverlässig gewährleistet werden kann bzw. gelingt. Schließlich hat sich auch gezeigt, dass bei den erfindungsgemäßen wässrigen Kleberzusammensetzungen mit einer Erhöhung der Viskosität regelmäßig auch ein besseres Haftvermögen erzielen lässt.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Kleberzusammensetzung mit einem pH-Wert größer oder gleich 10,0, bevorzugt im Bereich von größer 10 bis 12,0 und besonders bevorzugt im Bereich von 11,0 bis 11,5, oder eingestellt auf einen pH-Wert größer oder gleich 10,0, bevorzugt im Bereich von größer 10 bis 12,0 und besonders bevorzugt im Bereich von 11,0 bis 11,5, enthaltend oder bestehend aus
a) mindestens einem pH-Einstellmittelsystem ausgewählt aus der Gruppe bestehend aus
a1-1) Alkylalkoxysilan, Alkylalkoxysiloxan und/oder Alkalialkylsilikonat, bevorzugt Alkylalkoxysilan und besonders bevorzugt Kaliummethylsilikonat,
a1-2) Wasserglas und/oder Kieselsol, insbesondere Wasserglas, und
a1-2) gegebenenfalls Alkalihydroxid, Erdalkalihydroxid und/oder Alkalioxid,
oder
a2-1) Alkylalkoxysilan, Alkylalkoxysiloxan und/oder Alkalialkylsilikonat, bevorzugt Alkylalkoxysilan und besonders bevorzugt Kaliummethylsilikonat,
a2-2) gegebenenfalls Alkalihydroxid, Erdalkalihydroxid und/oder Alkalioxid, wobei die Kleberzusammensetzung im Wesentlichen frei ist von Wasserglas und/oder Kieselsol, insbesondere frei von Kieselsol und Wasserglas,
oder
a3-1) Alkalihydroxid, Erdalkalihydroxid und/oder Alkalioxid, insbesondere Alkalihydroxid, und
a2-2) gegebenenfalls Wasserglas und/oder Kieselsol, insbesondere Wasserglas, wobei die Kleberzusammensetzung im Wesentlichen frei ist von Kaliummethylsilikonat, insbesondere Alkalialkylsilikonat,
oder
a4-1) Wasserglas und/oder Kieselsol, insbesondere Wasserglas, und
a4-2) gegebenenfalls Alkalihydroxid, Erdalkalihydroxid und/oder Alkalioxid, insbesondere Alkalihydroxid, und
wobei die Kleberzusammensetzung im Wesentlichen frei ist von Kaliummethylsilikonat, insbesondere Alkalialkylsilikonat,
und
b) gegebenenfalls mindestens einem polymeren organischen Bindemittel,
c) mindestens einem Polysaccharid-Verdicker, insbesondere kaltwasserlöslichem Polysaccharid-Verdicker, ausgewählt aus der Gruppe bestehend aus Celluloseethern, insbesondere Methylcellulose, Carboxyalkylcellulose, insbesondere Carboxymethylcellulose, Hydroxyalkylcellulose, Alkylhydroxyalkylcellulose, Stärke, insbesondere Kartoffelstärke, Stärkeethern, insbesondere modifizierte Amylose und/oder Amylopectin, Guarethern, Dextrinen und Mischungen dieser Verbindungen, mit einer Höppler-Viskosität in 1,9 %-iger wässriger Lösung im Bereich von 200 bis 200,000 mPas, insbesondere im Bereich von 2.000 bis 30.000 mPas, gemessen bei 20°C nach DIN 53015:2018-07, und
d) mindestens einem Additiv sowie
e) gegebenenfalls Füllstoffen und/oder Pigmenten.

2. Kleberzusammensetzung nach Anspruch 1, **dadurch gekennzeichnet, dass** die Kleberzusammensetzung im Wesentlichen frei von Kieselsol ist.

3. Kleberzusammensetzung nach Anspruch 1 oder 2, **dadurch gekennzeichnet, dass** diese im Wesentlichen konservierungsmittelfrei ist.

4. Kleberzusammensetzung nach einem der vorangehenden Ansprüche, enthaltend mindestens ein Alkalialkylsilikonat, insbesondere Kaliummethylsilikonat, mindestens ein Alkalihydroxid, insbesondere Kaliumhydroxid, und als den mindestens einen Polysaccharid-Verdicker mindestens einen Celluloseether.

5. Kleberzusammensetzung nach einem der vorangehenden Ansprüche, **dadurch gekennzeichnet, dass**
das polymere organische Bindemittel ein Bindemittel auf wässriger Dispersionsbasis darstellt.

6. Kleberzusammensetzung nach einem der vorangehenden Ansprüche, **dadurch gekennzeichnet, dass**
das polymere organische Bindemittel, insbesondere in Form einer wässrigen Dispersion, Vinylacetat/Olefin-Copolymere, insbesondere Vinylacetat/EthylenCopolymere, Copolymere auf Basis von Vinylaromaten, insbesondere Styrol, und (Meth)acrylaten, insbesondere Acrylaten, Copolymere auf Basis von Reinacrylaten und/oder Organo-Silikat-Hybridbindemittel, insbesondere Organo-Silikat/Acrylat-Hybridbindemittel, umfasst.

7. Kleberzusammensetzung nach einem der vorangehenden Ansprüche, **dadurch gekennzeichnet, dass**
das Additiv ausgewählt ist aus der Gruppe bestehend aus Stabilisatoren, Netzmitteln, Dispergiermitteln, Neutralisationsmitteln, Entschäumern und beliebigen Mischungen dieser Komponenten.

8. Kleberzusammensetzung nach einem der vorangehenden Ansprüche, **dadurch gekennzeichnet, dass**
der Trockengewichtsanteil an Komponente a), insbesondere an Alkalialkylsilikonat, insbesondere Kaliummethylsilikonat, bezogen auf das Gesamtgewicht der Kleberzusammensetzung, im Bereich von 0,05 bis 2,5 Gew.%, bevorzugt im Bereich von 0,1 bis 2,0 Gewichtsprozent und besonders bevorzugt im Bereich von 0,2 bis 1,5 Gewichtsprozent, liegt und/oder dass
der Trockengewichtsanteil an organischem Bindemittel b), bezogen auf das Gesamtgewicht der Kleberzusammensetzung, im Bereich von o bis 20 Gewichtsprozent, bevorzugt im Bereich von 2 bis 15 Gewichtsprozent und besonders bevorzugt im Bereich von 3 bis 10 Gewichtsprozent, liegt und/oder dass
der Trockengewichtsanteil des mindestens einen Polysaccharid-Verdickers c), bezogen auf das Gesamtgewicht der Kleberzusammensetzung, im Bereich von 0,1 bis 10 Gew%, bevorzugt im Bereich von 0,5 bis 7,5 Gewichtsprozent und besonders bevorzugt im Bereich von 1,0 bis 5,0 Gewichtsprozent, liegt und/oder dass
der Trockengewichtsanteil an Additiven d), bezogen auf das Gesamtgewicht der Kleberzusammensetzung, im Bereich von 0,01 bis 5 Gewichtsprozent, bevorzugt im Bereich von 0,05 bis 3,0 Gewichtsprozent und besonders bevorzugt im Bereich von 0,07 bis 2,0 Gewichtsprozent, liegt und/oder dass
der Gewichtsanteil an dem Füllstoff und/oder Pigment e), bezogen auf das Gesamtgewicht der Kleberzusammensetzung, im Bereich von 0 bis 20 Gewichtsprozent, bevorzugt im Bereich von 1 bis 15 Gewichtsprozent und besonders bevorzugt im Bereich von 2 bis 10 Gewichtsprozent, liegt und/oder dass
der Anteil an Wasser, bezogen auf das Gesamtgewicht der Kleberzusammensetzung, oberhalb von 50 Gewichtsprozent, bevorzugt im Bereich von 60 bis 95 Gewichtsprozent und besonders bevorzugt im Bereich von 70 bis 90 Gewichtsprozent, liegt, wobei die die Kleberzusammensetzung bildenden Komponenten sich stets zu 100,0 Gew.-% addieren.

9. Kleberzusammensetzung nach einem der Ansprüche 1 bis 7, **dadurch gekennzeichnet, dass**
der Trockengewichtsanteil an Alkalialkylsilikonat, insbesondere Kaliummethylsilikonat, bezogen auf das Gesamtgewicht der Kleberzusammensetzung, im Bereich von 0,1 bis 2,0 Gewichtsprozent und bevorzugt im Bereich von 0,2 bis 1,0 Gewichtsprozent, liegt und dass
der Trockengewichtsanteil an Alkalihydroxid, insbesondere Kaliumhydroxid, bezogen auf das Gesamtgewicht der Kleberzusammensetzung, im Bereich von 0,1 bis 2,0 Gewichtsprozent und bevorzugt im Bereich von 0,2 bis 1,0 Gewichtsprozent, liegt und dass
der Trockengewichtsanteil an organischem Bindemittel b), bezogen auf das Gesamtgewicht der Kleberzusammensetzung, im Bereich von 0 bis 15 Gewichtsprozent und bevorzugt im Bereich von 3 bis 10 Gewichtsprozent, liegt und dass
der Trockengewichtsanteil des mindestens einen Polysaccharid-Verdickers c), insbesondere des Celluloseethers c), bezogen auf das Gesamtgewicht der Kleberzusammensetzung, im Bereich von 0,5 bis 7,5 Gewichtsprozent und bevorzugt im Bereich von 1,0 bis 5,0 Gewichtsprozent, liegt und dass
der Trockengewichtsanteil an Additiven d), bezogen auf das Gesamtgewicht der Kleberzusammensetzung, im Bereich von 0,05 bis 3,0 Gewichtsprozent und bevorzugt im Bereich von 0,07 bis 2,0 Gewichtsprozent, liegt und dass
der Gewichtsanteil an dem Füllstoff und/oder Pigment e), bezogen auf das Gesamtgewicht der Kleberzusammensetzung, im Bereich von o bis 20 Gewichtsprozent und bevorzugt im Bereich von 2 bis 10 Gewichtsprozent, liegt und dass
der Anteil an Wasser, bezogen auf das Gesamtgewicht der Kleberzusammensetzung, im Bereich von 60 bis 95 Gewichtsprozent und bevorzugt im Bereich von 70 bis 90 Gewichtsprozent, liegt, wobei die die Kleberzusammensetzung bildenden Komponenten sich stets zu 100,0 Gew.-% addieren.

10. Kleberzusammensetzung nach einem der vorangehenden Ansprüche, **gekennzeichnet durch**
eine Viskosität, ermittelt bei einer Schergeschwindigkeit von 400 s⁻¹, im Bereich von 95 bis 2000 mPas, bevorzugt im Bereich von 100 bis 1750 mPas und besonders bevorzugt im Bereich von 400 bis 1500 mPas, und/oder eine Viskosität, ermittelt bei einer Schergeschwindigkeit von 1200 s⁻¹, im Bereich von 50 bis 750 mPas, bevorzugt im Bereich von 60 bis 650 mPas und besonders bevorzugt im Bereich von 250 bis 600 mPas.

11. Beschichtung erhalten oder erhältlich aus einer wässrigen Kleberzusammensetzung nach einem der vorangehenden Ansprüche.

12. Beschichtung nach Anspruch 11, **dadurch gekennzeichnet, dass**
diese eine Zwischenbeschichtung darstellt, insbesondere zwischen einer Oberfläche eines Substrats, insbesondere Putzschichtoberfläche, und einem Wand- oder Bodenbelag, insbesondere einer Tapete, einer gewebten Oberflächenbedeckung oder einem Vlies.

13. Beschichtung nach Anspruch 11 oder 12, **dadurch gekennzeichnet, dass**
diese im Wesentlichen konservierungsmittelfrei ist und/oder dass
diese im Wesentlichen frei von Wasserglas ist und/oder dass
diese im Wesentlichen frei von Kaliummethylsiliconat, insbesondere Alkalialkylsiliconat, ist.

14. Beschichtetes Substrat, umfassend in dieser Reihenfolge
ein Substrat mit einer beschichtbaren Oberfläche, darauf vorliegend eine Beschichtung gemäß einem der Ansprüche 10 bis 12 und haftend mit dieser Beschichtung verbunden einen Wand- oder Bodenbelag, insbesondere eine Tapete, eine gewebten Oberflächenbedeckung oder ein Vlies.

15. Beschichtetes Substrat nach Anspruch 14, **dadurch gekennzeichnet, dass**
der Wand- oder Bodenbelag, insbesondere ein Vlies, beim Schälversuch in Anlehnung an DIN EN 1372:2015-06 einen Schälwiderstand im Bereich von 0,10 bis kleiner 0,40 N/mm, insbesondere im Bereich von 0,12 bis 0,35 N/mm, aufweist.

16. Verwendung der wässrigen Kleberzusammensetzung nach einem der Ansprüche 1 bis 10 für die haftende Anbindung einer Tapete, einer gewebten Oberflächenbedeckung oder eines Vlieses auf einer Substratoberfläche, insbesondere Putzschichtoberfläche.
